# EUROPEAN PATENT SPECIFICATION

(11) **EP 2 544 189 B1**
(45) Date of publication and mention of the grant of the patent: **21.06.2017**
(21) Application number: 12174481.7
(22) Date of filing: 29.06.2012
(51) Int. Cl.: G21F 9/16, G21F 9/30, G21F 1/04, C04B 28/06, C04B 111/00

(54) **Material for absorption and attenuation of neutrons**
Material zur Absorption und Abschwächung von Neutronen
Matériau pour l'absorption et l'atténuation de neutrons

(30) Priority: 08.07.2011 ES 201131165
(43) Date of publication of application: 09.01.2013
(73) Proprietor: Arraela S.L., 15623 La Coruña (ES)
(72) Inventor: Caruncho Rodado, Juan Manuel, 15623 La Coruña (ES)
(74) Representative: Del Valle Valiente, Sonia

(56) References cited:
- FR-A1- 2 546 331
- JP-A- 2005 139 010
- JP-B- 6 088 824
- US-A1- 2010 229 762

## Description

### OBJECT OF THE INVENTION

The present invention relates to a mass, specially designed for the manufacture of high-capacity of neutron radiation protection products, such as concrete, bricks, tiles and mortars.

The object of the invention is to achieve a mass with high homogeneity, with an optimum barrier effect against neutrons of diverse energy, allowing a marked reduction of the thickness of shielding barriers against standard materials to achieve the same barrier effect to said radiation.

It is also the object of the invention to cause and/or accentuate the effect of neutron absorption in their various energies from this material, and to eliminate or significantly reduce the effect of neutron scattering indoors, which in the case of the cancer treatment bunkers, would mean that the patient would only receive the neutrons received directly from the main beam eliminating those received by the scatter effect. The electronics and room control systems are also benefited by this fact, as well as a significant reduction in the shielding of the bunker door, among other beneficial aspects.

The invention is applicable to any system of radiological protection, such as containers and/or mobile barriers of radioactive facilities, radiotherapy bunkers, or any facility where the existence of neutrons is expected.

### BACKGROUND OF THE INVENTION

Concrete with capacity of radiation protection have, in addition to the usual cement components, water and chemical additives which vary according to the characteristics intended for them, such as resistance, setting time, protection against freezing, assurance of the absence of cracking, marine environment, etc., and an aggregate that distinguishes them from conventional concrete.

The problem posed by this type of concrete is that in order to provide good radiation protection properties, it is necessary to have a considerable wall thickness, with the consequent and negative impact on weight, space, and cost, since the hydrogen content in the same is usually low.

Trying to avoid this problem, the Invention Patent with Application Number P 200900481 and publication number ES 2 344 290 is known, which describes a mass for the manufacture of products with high capacity of neutron radiation protection, mass that the same as any conventional concrete, is structured based on cement, aggregates, water and chemical additives that change the characteristics of the concrete, with the particularity that said mass uses as aggregate Colemanite with a very continuous grain size to achieve a perfect homogeneity in mass, determinant of a barrier effect against neutron radiation, which allows to significantly reduce the wall thickness without diminishing the barrier effect.

More specifically, said Patent envisaged the use of Portland cement, water, Colemanite and additives.

The applicant of this Patent has discovered that the results obtained with the same can be clearly improved through the use of new components in the mass in question.

### DESCRIPTION OF THE INVENTION

According to the features of the invention, as set out in claim 1 in the material rather than the aforementioned Portland cement, Alumina cement (Al₂O₃) is used. The Alumina content of the cement is comprised between 36 % and 45%, and it can reach 70 %, depending on the availability of this type of product, and controlling the capacity of reaction with calcium sulfate.

According to the features of the invention, a new component is introduced into the mass, particularly anhydrous calcium sulfate (CaSO₄). This sulfate must have a high degree of purity.

The use of aggregate of Colemanite is maintained (Ca₂B₆O₁₁ 5H₂O), which as it is known is a calcium borate, and also the chemical additives needed for a proper production and installation or casting are maintained.

The new material, i.e. the new composition of the mass, with a volumetric distribution is as follows:
- Alumina cement between 4 and 5 %.
- Water between 17 and 18 %.
- Anhydrous calcium sulfate between 5 and 5.5 %.
- Colemanite between 72 and 73,5 %.
- Additives of the order of 0.02 %.

From the suitable combination between the cement with high content of Alumina and the anhydrous calcium sulfate, a quick crystallization of Ettringite (3CaO Al₂O₃ 3CaSo₄ 32H₂O) is achieved, therefore significantly increasing the number of hydrogen molecules, very effective for neutron capture primarily the fast neutrons, absorbing them or thermalizing them, these thermal neutrons being the ones that are captured by the boron contained in the mixture.

### DESCRIPTION OF DRAWINGS

In order to complement the description that is being made and with the object of helping to a better understanding of the features of the invention, according to a preferred example of practical embodiment of the same, is accompanied as an integral part of the description, a set of drawings where with illustrative character and without limitation, the following has been represented:
Figure 1- It shows a graph wherein the fluence of the neutrons in the isocenter of a bunker with simple labyrinth has been shown, wherein the walls of the same have been lined with the mass object of the invention, with a thickness of 5 cm.
Figure 2- It shows a plot similar to figure 1, but in the center of the corridor of the labyrinth.

### EXAMPLE OF PREFERED EMBODIMENT OF THE INVENTION

In a practical embodiment of the mass or spilled material, the following mixture expressed in volume has been carried out:
- Alumina cement ............... 4.5 %
- Water .......................................... 17.5 %
- Anhydrous calcium sulfate........ 5.23 %
- Colemanite ................................ 72.75 %
- Additives..................................... 0.02 %

These figures may vary from the order of 10% both in positive and negative sense, based on production processes to be used, curing, fraction of the aggregate to be used, and objectives of priority weight such as radiation protection coefficients, mechanical strength of the mass, cracking, etc.

In cases where the granulometric fraction of Colemanite is small in size, specifically when the maximum size of the aggregate in the fraction is less than 8 or 10 mm, variations in the dosing of the previous formulation may be even greater than 10%, due to the solubility of Colemanite in water.

Density is not a parameter pursued in a specific way, and will be the result of the optimization of the mixture. However it will be around 2.1 Kg/dm³.

As previously mentioned, the heavy mass that the invention proposes allows obtaining poured concrete, concrete for bricks, concrete for tiles or dry mortar.

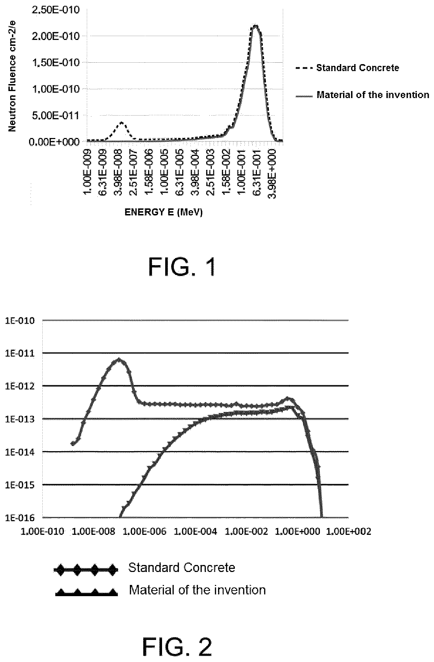

The results obtained with the invention are clearly reflected in the graphs shown in figures 1 and 2.

## Claims

1. Material for absorption and attenuation of neutrons, **characterized by** having the following composition: alumina cement between 4-5%; water between 17-16%; anhydrous calcium sulfate between 5 and 5.5%; colemanite between 72-73.5%; and additives approximately 0.02%, where the content of alumina in the cement is comprised between 36% and 70%.

## Patentansprüche

1. Material zur Absorption und Abschwächung von Neutronen, **dadurch gekennzeichnet, dass** es die folgende Zusammensetzung aufweist: Aluminium-Bindemittel zwischen 4-5 %; Wasser zwischen 17-18%; anhydridisches Kalziumsulfat zwischen 5 und 5,5%; Colemanit zwischen 72-73,5%; und Additive von ungefähr 0,02%, wobei der Gehalt an Aluminium in dem Bindemittel zwischen 36% und 70% umfasst.

## Revendications

1. Matériau pour l'absorption et l'atténuation de neutrons, **caractérisé en ce qu'**il présente la composition suivante : entre 4 et 5 % de ciment d'alumine, entre 17 et 18 % d'eau, entre 5 et 5,5 % de sulfate de calcium anhydre, entre 72 et 73,5 % de colémanite et environ 0,02 % d'additifs, la teneur en alumine dans le ciment étant de l'ordre de 36 % à 70 %.
